# FASCICULE DE BREVET EUROPEEN

(11) **EP 0 546 350 B1**
(45) Date de publication et mention de la délivrance du brevet: **28.01.1998**
(21) Numéro de dépôt: 92119549.1
(22) Date de dépôt: 16.11.1992
(51) Int. Cl.: A23B 7/022, A23B 7/155, A23L 1/212

(54) **Procédé de préparation de fruits secs**
Verfahren zur Herstellung von getrockneten Früchten
Process for preparing dried fruits

(30) Priorité: 13.12.1991 CH 3697/91
(43) Date de publication de la demande: 16.06.1993
(73) Titulaire: SOCIETE DES PRODUITS NESTLE S.A., 1800 Vevey (CH)
(72) Inventeur: Burri, Josef, CH-1066 Epalinges (CH); Nicod, Pierre, CH-1041 Bottens (CH)
(74) Mandataire: Pate, Frederick George

(56) Documents cités:
- EP-A- 0 337 249
- WO-A-91/00022
- DE-A- 1 692 206
- US-A- 4 542 033

## Description

La présente invention a trait à un procédé de traitement de fruits secs.

Certains produits alimentaires de type prêts à servir, plus particulièrement destinés au petit déjeuner, sont composés pour l'essentiel d'un mélange de céréales sous forme de flocons, et de fruits secs, entiers ou en cubes.
Les céréales employées sont en général le blé, le maïs et l'avoine, et les fruits employés sous forme séchée peuvent être des pommes, des abricots, des bananes, des figues, des raisins par exemple.
Une des caractéristiques principales de ces produits alimentaires réside dans la texture croustillante des flocons de céréales ainsi que dans la tendreté des fruits secs.
Il est donc important que chacun des composants du produit final conserve ses qualités organoleptiques propres, pendant son stockage, jusqu'au moment de sa consommation.

Or la croustillance des flocons de céréales et la tendreté des fruits secs dépendent principalement de leur valeur d'activité de l'eau (Aw).
Ainsi, les flocons de céréales présentent une texture croustillante quand leur activité de l'eau est de l'ordre de 0,15-0,25. Lorsque l'activité de l'eau dépasse 0,35, les flocons perdent leur croustillance et deviennent mous.
De même, les fruits secs présentent une tendreté agréable quand leur activité de l'eau est de l'ordre de 0,50-0,55. Quand l'activité de l'eau descend en-dessous de 0,40, les fruits secs deviennent durs.

Lorsque l'on prépare et stocke le produit alimentaire final, en mélangeant les flocons de céréales et les fruits secs, un transfert d'humidité peut s'effectuer, les fruits secs perdant de l'eau au profit des flocons de céréales. On obtient généralement un équilibre autour d'une valeur d'activité de l'eau du produit final de 0,25-0,40, valeur à laquelle les flocons sont mous et les fruits secs durs.

Il a alors été proposé de traiter les fruits avec un humectant tel que le glycérol, de manière à ce que ceux-ci gardent une texture agréable et tendre, pour une valeur d'activité de l'eau inférieure à 0,50.
Pour obtenir une bonne absorption de l'humectant dans les fruits, il est préférable d'augmenter la perméabilité de leur peau par prétraitement, avant leur trempage dans l'humectant.

Il est ainsi connu, par exemple par le brevet CA 981 523, de prétraiter à chaud les fruits avec un acide faible, puis de les traiter avec un humectant tel qu'une solution de sorbitol ou de glycerol pendant environ 15-24 heures, jusqu'à ce que les fruits absorbent au moins 3% d'humectant. Les fruits ainsi traités sont ensuite séchés jusqu'à une teneur en matière sèche de 80-88%.

La présente invention a pour but de proposer un procédé de traitement de fruits secs dans lequel on évite l'étape de prétraitement avec un acide faible.

La présente invention a pour objet un procédé dans lequel on met en contact les fruits séchés avec une solution de glycérol contenant 0,05-0,5 parties d'enzymes carbohydrases pour 100 parties de fruits, on laisse incuber les fruits en contact avec la solution de glycérol à une température de 40-60°C jusqu'à ce que les fruits aient absorbé au moins 10% de glycérol, on inactive les enzymes puis l'on sèche les fruits obtenus jusqu'à une activité de l'eau de 0,25-0,40.

WO-A-9 100 022 et DE-A- 1 692 206 précise l'utilisation des enzymes carbohydrases pour des fruits frais

L'utilisation d'une solution de glycérol contenant des enzymes carbohydrases permet de réduire de façon importante le temps de préparation des fruits secs, d'une part en supprimant l'étape de prétraitement, d'autre part en réduisant le temps d'incubation des fruits en présence du glycérol.
Il est en effet apparu que l'utilisation d'une solution de glycérol contenant des enzymes carbohydrases permettait d'améliorer la perméabilité de la peau des fruits traités, et facilitait donc l'absorption du glycérol par lesdits fruits.

Dans la suite de la présente description, les parties et pourcentages sont donnés en poids, sauf indications contraires.

Dans le procédé selon la présente invention, on met en contact les fruits séchés, entiers ou prédécoupés en forme de cubes par exemple, présentant une teneur en matière sèche de 85-88%, avec une solution de glycérol contenant 0,05-0,5 parties d'enzymes carbohydrases pour 100 parties de fruits à traiter.
La solution de glycérol peut être constituée de glycérol pur, ou d'une solution aqueuse contenant 80-90% de glycérol. Elle contient de préférence 0,1-0,4% d'enzymes carbohydrases.
On peut utiliser comme source d'enzymes carbohydrases toute enzyme qui permet d'obtenir une diffusion correcte du glycérol à l'intérieur des fruits.
On peut utiliser par exemple une cellulase, une carbohydrase mixte, une pectinase, une galactomannanase, une hemicellulase, ou un mélange de ces différentes enzymes.
On met alors en contact la solution de glycérol contenant les enzymes et les fruits.

De préférence on met en contact une partie de fruits avec 1 à 2 parties de solution de glycérol.
Pour ce faire, on peut par exemple tremper les fruits dans la solution, de préférence préalablement chauffée à 40-60°C, pendant une durée de 2 à 5 heures, de préférence 3 heures.
Selon un mode de réalisation préféré, on peut également pulvériser la solution de glycérol contenant les enzymes, à une température de 40-60°C, sur les fruits. La pulvérisation peut également être effectuée à plusieurs reprises, ou en plusieurs étapes. Ce mode de réalisation permet l'utilisation d'une quantité moins importante de glycérol (de l'ordre de 70-80 ml pour 100 g de fruits), tout en favorisant son absorption dans les fruits.

On laisse ensuite incuber les fruits en contact avec la solution de glycérol, à une température de 40-60°C, jusqu'à ce que les fruits aient absorbé au moins 10% de glycérol.
On peut, par exemple laisser les fruits incuber dans une étuve à 40-60°C pendant 2-5 heures.

Il est possible de diminuer la durée de l'incubation en faisant subir aux fruits un prétraitement avant de les mettre en contact avec la solution de glycérol.
Ainsi, si l'on prétraite les fruits par immersion pendant 2-4 minutes dans de l'eau à 90-100°C, avant de les mettre en contact avec la solution de glycérol contenant les enzymes, la durée de l'incubation à 40-60°C nécessaire pour obtenir une teneur en glycérol d'au moins 10% est réduite à 1h30-2h30.

Quand les fruits ont atteint la teneur en glycérol souhaitée, on inactive les enzymes. Ceci peut être fait, par exemple, par trempage des fruits dans une solution de glycérol à 75-95°C pendant 20-40 minutes. Cette inactivation dans le glycérol permet de diminuer la migration des sucres contenus dans ces fruits vers l'extérieur.
Les fruits ainsi obtenus peuvent être rincés rapidement, par exemple à l'eau, puis sont séchés, par exemple avec de l'air chaud à 50-70°C, pendant 10-20 heures environ, jusqu'à l'obtention d'une activité de l'eau de 0,25-0,40, et d'une teneur en matière sèche de l'ordre de 88-92%.

L'invention est illustrée plus en détail par les exemples suivants.

### Exemple 1

On prépare une solution de glycérol à 87% comprenant 0,1% d'une carbohydrase.
On trempe 100 g de raisins séchés présentant une teneur en matière sèche de 88% dans 100 g de la solution préparée, préalablement chauffée à 50°C.
Le mélange est brassé de manière à éliminer l'air emprisonné à la surface des raisins, puis laissé à incuber pendant 3 heures à 50°C.

Après la période d'incubation, les raisins sont trempés pendant 30 minutes dans une solution de glycérol à 87%, préalablement chauffée à 95°C, afin d'inactiver les enzymes, puis rapidement rincés à l'eau pour éliminer le glycérol présent à leur surface, de manière à faciliter leur manipulation ultérieure en minimisant les risques de collage et d'agglomération.
Les raisins ainsi traités sont alors séchés dans une étuve ventilée à 40°C, pendant environ 15 heures, en étant retournés de temps à autre.
On obtient ainsi des raisins secs présentant une teneur en matière sèche de 88-90%, une activité de l'eau de 0,29-0,32 et une teneur en glycérol de 21,5%.

### Exemple 2

On prépare une solution de glycérol à 87% comprenant 0,5% de carbohydrase, que l'on chauffe à 50°C.
On pulvérise cette solution sur des raisins séchés, de manière à les humecter le mieux possible.
Les raisins sont ensuite étalés sur une feuille d'aluminium puis placés dans une étuve à 50°C où ils sont laissés à incuber pendant 3 heures.
Au cours de ces 3 heures d'incubation, on répète l'étape de pulvérisation deux fois.
Après la période d'incubation, les raisins sont trempés pendant 30 minutes dans une solution de glycérol à 87%, préalablement chauffée à 95°C, afin d'inactiver les enzymes, puis rapidement rincés à l'eau pour éliminer le glycérol présent à leur surface, de manière à faciliter leur manipulation ultérieure en minimisant les risques de collage et d'agglomération.
Les raisins ainsi traités sont alors séchés dans une étuve ventilée à 40°C, pendant environ 15 heures, en étant retournés de temps à autre.
On obtient ainsi des raisins secs présentant une teneur en matière sèche de 88-90%, une activité de l'eau de 0,29-0,32, et une teneur en glycérol de 18,2%.

### Exemple 3

On trempe des raisins séchés, présentant une teneur en matière sèche de 88% dans de l'eau chaude à 90-100°C pendant 3 minutes, afin d'attendrir leur peau, puis on les laisse refroidir jusqu'à 50°C.

On pulvérise une solution de glycérol à 87% comprenant 0,5% de carbohydrase, préalablement chauffée à 50°C sur les raisins ainsi prétraités.
Les raisins sont ensuite étalés sur une feuille d'aluminium puis placés dans une étuve à 50°C où ils sont laissés à incuber pendant 3 heures.
Au cours de ces 3 heures d'incubation, on répète l'étape de pulvérisation deux fois.
Après la période d'incubation, les raisins sont trempés pendant 30 minutes dans une solution de glycérol à 87%, préalablement chauffée à 95°C, afin d'inactiver les enzymes, puis rapidement rincés à l'eau pour éliminer le glycérol présent à leur surface, de manière à faciliter leur manipulation ultérieure en minimisant les risques de collage et d'agglomération.
Les raisins ainsi traités sont alors séchés dans une étuve ventilée à 40°C, pendant environ 15 heures, en étant retournés de temps à autre.
On obtient ainsi des raisins secs présentant une teneur en matière sèche de 88-90%, une activité de l'eau de 0,29-0,32, et une teneur en glycérol de 18,5%.

### Exemple 4

On prépare deux lots d'un produit de type muesli en mélangeant 90% de base constituée de pétales de céréales (blé, maïs,...) et 10% de raisins secs. Le premier lot A contient des raisins standards du commerce, le deuxième lot B contient des raisins préparés selon l'exemple 3, contenant 15,3% de glycérol.

On stocke ces deux lots à 30°C.
On prélève un échantillon après 1 mois et après 3 mois de stockage. On sépare la base et les raisins et on détermine la teneur de matière sèche (MS), la valeur d'activité d'eau (Aw) et la dureté de la base et des raisins.
La dureté est évaluée par dégustation, en donnant des notes allant de 1 (très dur) à 5 (très tendre).

On obtient les résultats suivants:

| Durée du stockage | Lot A | | Lot B | |
|---|---|---|---|---|
| | base | raisins | base | raisins |
| t=0 | | | | |
| MS (%) | 4,4 | 15,5 | 4,4 | 17,2 |
| Aw | 0,22 | 0,59 | 0,22 | 0,46 |

| t=1 mois | | | | |
|---|---|---|---|---|
| MS (%) | 5,5 | 7,4 | 4,8 | 12,1 |
| Aw | 0,32 | 0,34 | 0,30 | 0,30 |
| dureté | -- | 1,3 | -- | 4,0 |

| t=3 mois | | | | |
|---|---|---|---|---|
| MS (%) | 5,0 | 7,2 | 5,0 | 8,3 |
| Aw | 0,36 | 0,36 | 0,31 | 0,31 |
| dureté | -- | 2,3 | -- | 3,8 |

On constate donc que les raisins selon l'invention, après 1 ou 3 mois de stockage à 30°C, ont conservé leur caractère tendre, alors que les raisins standards sont durs, et jugés inacceptables à la consommation.

### Exemple 5

On prétraite, traite et sèche des raisins secs de manière identique à celle décrite à l'exemple 3 en remplaçant la carbohydrase par d'autres enzymes:
pectinase, cellulase et galactomannanase.

On obtient les résultats suivants:

| Enzyme utilisée | teneur finale en glycérol (% sur matière sèche) |
|---|---|
| carbohydrase | 18,5 |
| pectinase | 16,0 |
| cellulase | 14,7 |
| galactomannanase | 18,7 |

On peut donc utiliser diverses enzymes pour réaliser l'invention.

### Exemple 6

On prétraite, traite et sèche des raisins secs de manière identique à celle décrite dans l'exemple 3, en faisant varier la durée d'incubation.
Pour comparaison, on applique le même traitement à un lot témoin, mais en utilisant une solution de glycérol qui ne contient pas d'enzymes.

On obtient les résultats suivants:

| Incubation | teneur en glycérol (% sur matière sèche) |
|---|---|
| Lot avec enzyme | |
| . 3 heures, 50°C | 24,5 |
| . 6 heures, 50°C | 26,7 |
| . 15 heures, 50°C | 27,6 |

| Lot témoin sans enzyme | |
|---|---|
| . 3 heures, 50°C | 19,1 |
| . 6 heures, 50°C | 23,2 |
| . 15 heures, 50°C | 16,7 |

On constate donc que le fait d'utiliser des enzymes améliore de façon remarquable l'absorption du glycérol dans les raisins.
On constate également que la durée de l'incubation permet d'influer sur la teneur finale des raisins en glycérol.

## Revendications

1. Procédé de traitement de fruits secs dans lequel on met en contact les fruits séchés avec une solution de glycérol contenant 0,05-0,5 parties d'enzymes carbohydrases pour 100 parties de fruits, on laisse incuber les fruits en contact avec la solution de glycérol à une température de 40-60°C jusqu'à ce que les fruits aient absorbé au moins 10% de glycérol, on inactive les enzymes puis l'on sèche les fruits obtenus jusqu'à obtention d'une activité de l'eau de 0,25-0,40.

2. Procédé selon la revendication 1 dans lequel la mise en contact est effectuée par pulvérisation de la solution de glycérol à une température de 40-60°C sur les fruits.

3. Procédé selon la revendication 1 dans lequel les fruits séchés sont prétraités par immersion pendant 2-4 minutes dans de l'eau à 90-100°C, avant d'être mis en contact avec la solution de glycérol.

## Claims

1. Process for the treatment of dry fruits, wherein the dried fruits are put into contact with a solution of glycerol containing 0.05-0.5 parts of carbohydrase enzymes per 100 parts of fruit, the fruits are allowed to incubate in contact with the glycerol solution at a temperature of 40-60°C until the fruits have absorbed at least 10 % glycerol, the enzymes are inactivated and the fruits obtained are then dried until a water activity of 0.25-0.40 is obtained.

2. Process according to claim 1, wherein contact is achieved by spraying the glycerol solution onto the fruits at a temperature of 40-60°C.

3. Process according to claim 1, wherein the dried fruits are pretreated by immersion in water at 90-100°C for 2-4 minutes, before being put into contact with the glycerol solution.

## Patentansprüche

1. Verfahren zur Behandlung von Trockenobst, in dem man das getrocknete Obst mit einer Glycerinlösung in Kontakt bringt, die auf 100 Teilen Obst 0,05-0,5 Teile Enzyme in Form von Carbohydrasen enthält, das Obst in Kontakt mit der Glycerinlösung bei einer Temperatur von 40 bis 60°C inkubieren läßt, bis das Obst mindestens 10% Glycerin absorbiert hat, die Enzyme inaktiviert und dann das erhaltene Obst trocknet, bis man eine Wasseraktivität von 0,25 bis 0,40 erhält.

2. Verfahren nach Anspruch 1, in dem der Kontakt durch Aufstäuben der Glycerinlösung auf das Obst bei einer Temperatur von 40 bis 60 °C hergestellt wird.

3. Verfahren nach Anspruch 1, in dem das getrocknete Obst durch Eintauchen in Wasser mit 90 bis 100 °C während 2 bis 4 min vorbehandelt wird, bevor es mit der Glycerinlösung in Kontakt gebracht wird.
